# FASCICULE DE BREVET EUROPEEN

(11) **EP 2 837 524 B1**
(45) Date de publication et mention de la délivrance du brevet: **12.02.2020**
(21) Numéro de dépôt: 13290191.9
(22) Date de dépôt: 14.08.2013
(51) Int. Cl.: B60M 3/00

(54) **Méthode de minimisation d'une consommation élecrique requise pour un réseau de transport public et plate-forme algorithmique associée**
Minimierungsmethode eines Stromverbrauchs für ein öffentliches Verkehrsnetz, und entsprechende algorithmische Plattform
Method for minimising the electricity consumption of a public transport network, and associated computational platform

(43) Date de publication de la demande: 18.02.2015
(73) Titulaire: Siemens Mobility S.A.S., 92320 Châtillon (FR)
(72) Inventeur: Bourdon, David, 59700 Marcq en Baroeul (FR); Chanclou, Nicolas, 35380 Paimpont (FR); Urien, Nicolas, 75013 Paris (FR)
(74) Mandataire: Deffner, Rolf

(56) Documents cités:
- EP-A1- 0 997 340
- EP-A1- 2 505 416
- EP-A1- 2 799 307
- WO-A1-2013/099171
- DE-A1-102008 020 981
- JP-A- H05 176 457
- US-A- 5 346 163

## Description

La présente invention concerne une méthode de minimisation d'une consommation électrique requise pour un réseau de transport public et plate-forme algorithmique associée selon les préambules des revendications 1 et 8.

L'urbanisation croissante de la population mondiale impose de restructurer les villes et les transports. On estime que la part des citadins dans le monde sera de 70% en 2050. Le défi majeur de cette évolution est de répondre à l'indispensable besoin de mobilité des hommes et des marchandises. En effet, les grandes tendances économiques actuelles, marquées par la mondialisation des marchés et l'accélération des échanges, impliquent une augmentation et une réorganisation de l'ensemble de l'offre des transports. L'explosion de cette mobilité induit des nuisances environnementales et sanitaires importantes. Devant le risque de réchauffement et de dérèglement climatique, les gouvernements européens ont donc pour ambition de réduire par 4 les émissions de gaz à effet de serre d'ici 2050.

Pour répondre à ces deux objectifs contradictoires, à savoir l'augmentation de la qualité de l'offre de transport et la diminution des émissions de gaz à effet de serres, sans parler de l'anticipation de l'épuisement des ressources fossiles, d'importants efforts sont à effectuer sur les systèmes énergétiques, ainsi que sur l'organisation globale de l'offre de transport. Depuis quelques années, on observe dans ce sens, un réaménagement des villes en réintroduisant des transports collectifs électriques tels que les tramways, les métros ou encore des bus électriques. Ces transports facilitent la mobilité urbaine et fonctionnent généralement à l'énergie électrique, les rendant moins polluants que l'automobile individuelle ou les bus classiques.

Bien que le ferroviaire (électrique) reste un des secteurs les moins polluants, le coût de l'énergie dans l'exploitation des systèmes de transport en particulier urbains est significatif et il en résulte une nécessité d'améliorer le rendement global des dits systèmes. L'idée d'une mobilité durable et d'une optimisation globale de l'énergie, d'un point de vue système, demeure un des défis de demain.

Dans ce contexte, de nombreuses études portent aujourd'hui sur l'introduction de stockage d'énergie en station ou en embarqué. Certaines applications ont cependant démontré qu'il est déjà possible, sans ajout d'équipements de stockage, d'obtenir une économie d'énergie (électrique) non négligeable par optimisation de la récupération d'énergie entre des rames présentes en ligne d'un système de transport. En effet, dans la traction ferroviaire électrique, les moteurs des rames consomment du courant pour circuler et en produisent lors des freinages, les moteurs se transformant alors en générateurs.

Un excellent exemple connu d'une telle méthode de minimisation d'une consommation électrique par récupération d'énergie est bien décrit au travers du brevet DE 196 52407 C1, en particulier par ses figures 1, 2a et 2b et leurs parties descriptives, en ce qu'une énergie est libérée par un freinage d'un des véhicules de transport public et puis récupérée par un autre des véhicules en mouvement dans le dit système de transport. Principalement, quand une sous-station au sol du système de transport détecte un apport d'énergie (issu du freinage d'un véhicule), elle envoie un signal radio à d'autres véhicules en mouvement et disposés dans sa zone de couverture radio afin de leur ordonner si possible (c'est-à-dire si des véhicules se trouvent au moins sous la couverture radio) d'utiliser immédiatement cet apport d'énergie disponible au lieu de consommer ou afin du moins de minimiser leur consommation en énergie payante d'un réseau d'alimentation du système de transport. La mise en œuvre de la méthode décrite au travers de DE 196 52407 C1 semble aussi limitée, dès lors que des ordres sont ainsi adressés aux véhicules qui ne présentent pas de marge suffisante pour une utilisation ou une récupération immédiate d'énergie impliquant d'adapter leur cinématique (vitesse, accélération) soit alors qu'ils se déplacent déjà à une vitesse maximale autorisée (et sont incapables de récupérer plus d'énergie) ou bien soit parce qu'ils doivent subir un freinage obligatoire avant une entrée en station (et sont forcés de perdre un surplus d'énergie).

Aujourd'hui, l'électricité produite lors des freinages ne se stocke usuellement pas encore (ou sinon à fort coût) et doit donc ainsi être consommée par des véhicules tels que des rames qui roulent. Si la production d'électricité (par récupération) excède la demande, l'énergie cinétique récupérable lors du freinage est ainsi perdue et dissipée. Dans ce dernier cas, les freins chauffent et s'usent. A tout instant donc, des rames démarrent, freinent, roulent ou sont à l'arrêt et les phases de production et de consommation d'électricité alternent continuellement. Deux situations se présentent alors :
- trop de rames sont en phase de démarrage et la puissance appelée est trop importante,
- trop de rames freinent au même moment et toute l'énergie cinétique ne peut pas être complètement récupérée par d'autres véhicules voire à moindre coût (sans moyen de stockage).

Diverses techniques ont été décrites afin de mieux gérer la consommation d'énergie dans le domaine ferroviaire. Par exemple, le document EP 0 997 340 A1 propose un procédé de commande de distribution d'énergie comprenant un centre de commande recevant l'énergie requise transmise par chaque locomotive électrique dans un réseau ferroviaire et transmettant à la locomotive une réponse indiquant la puissance maximale disponible, calculée en fonction de paramètres de fonctionnement de la locomotive. Le document US 5 346 163 A décrit un système de contrôle ferroviaire destiné à supprimer de manière contrôlable la puissance maximale d'un poste ferroviaire afin d'économiser de l'énergie dans un territoire d'exploitation densifié et dans lequel une valeur limite supérieure prédéterminée est établie à la sortie d'un poste électrique. Le document EP 2 505 416 A1 propose une méthode d'optimisation de la consommation d'énergie dans un réseau ferroviaire. Le document JP H05176457 A prévoit de fournir un contrôleur de système d'alimentation pour chemin de fer dans lequel le contrôle d'un redresseur est effectué de manière optimale en fonction de l'état de fonctionnement d'un véhicule électrique. Le document WO 2013/099171 A1 décrit une exploitation de wagons qui tient compte de la consommation totale d'énergie lors de l'alimentation des wagons et de la gestion de leur exploitation sur la base d'un programme d'entretien. Le document EP 2 799 307 A1 décrit une gestion d'une pluralité de trains sur la base d'un diagramme de train prédéfini et d'une quantité de consommation d'énergie totale prédéfinie de sorte que la quantité de consommation totale réelle accompagnant le fonctionnement de la pluralité de trains est maintenue dans la quantité de consommation totale prédéfinie. Finalement, le document DE 10 2008 020981 A décrit par exemple une méthode permettant de déterminer à quel moment un train devrait freiner afin de permettre une bonne gestion de la réutilisation de l'énergie de freinage dans un réseau électrique ferroviaire.

Un but de la présente invention est de proposer une méthode de minimisation d'une consommation électrique requise (en terme par exemple de minimisation de « puissance appelée ») pour un réseau de transport public comprenant plusieurs consommateurs tels que des véhicules électriques, lesdits véhicules en freinage délivrant une énergie pouvant être récupérée par des consommateurs du réseau tels que des véhicules en mouvement, et pour laquelle deux situations impliquant une surconsommation de la dite « puissance appelée » du réseau sont alors à éviter :
- trop de véhicules sont en phase de démarrage et la puissance appelée est trop importante pour être compensée par un apport en puissance récupérée par une énergie trop faible de freinage,
- trop de véhicules freinent au même moment et l'énergie cinétique n'est pas récupérable de façon à être effectivement redistribuée (en terme de puissance utile - c'est-à-dire instantanément utilisable - pour un véhicule « consommateur »).

Additionellement, un but de la présente invention est de proposer une plate-forme algorithmique pouvant mettre en œuvre la méthode précitée et adaptée à être simplement implémentée pour l'exécution d'ordre de marche d'un réseau de transport. Cette plate-forme devrait être suffisamment dynamique afin de permettre une mise en œuvre de l'algorithme de la méthode précitée de façon périodique (par exemple journalière) voire instantanée.

La méthode et la plate-forme algorithmique selon l'invention devraient être robustes pour contrer des perturbations et des aléas intempestifs de trafic du réseau de transport, au sens que la densité et la fréquence variable d'un trafic journalier soit maintenue à un niveau contraint ne pénalisant pas un utilisateur du réseau de transport.

Une solution est ainsi proposée selon une méthode de minimisation d'une consommation électrique requise pour un réseau d'un système de transport public et une plateforme algorithmique associée au travers des caractéristiques revendications 1 et 8.

A partir d'une méthode de minimisation d'une consommation électrique requise pour un réseau d'un système de transport public comprenant plusieurs consommateurs tels que des véhicules électriques (tramway, trolley, métro, trains, etc.) lesdits véhicules en freinage délivrant une énergie récupérable par des consommateurs du réseau tels que des véhicules en mouvement, la dite méthode selon l'invention se caractérise en ce que :
- une table horaire d'ordres de marche(s) de tous les véhicules est établie en prenant en compte au moins les paramètres suivant : une localisation dynamique de chaque véhicule, un horaire d'arrêt de chaque véhicule hors d'une zone d'arrêt, un horaire de départ de chaque véhicule dans une zone d'arrêt dans le réseau de transport;
- en fonction de variations temporelles et cinématiques d'au moins un des dits paramètres, au moins une partie des ordres de marche de la table horaire est modifiée chronologiquement selon au moins un critère de distribution maximale de l'énergie récupérée du freinage à des consommateurs en appel potentiellement actif de puissance ;
- la table horaire comprenant les ordres est délivrée aux véhicules.

En effet, la simple connaissance des paramètres précités permet avantageusement de déterminer une cinématique instantanée et prévisionnelle (sur au moins un court terme - quelques secondes - voire un long terme telle qu'une journée) de tous les véhicules et d'adapter ainsi aussi instantanément ou pré-visionnellement des « ordres de marche type » pour chacun des véhicules afin que, selon leur position localisée respective dans le réseau, leurs phases de marche en besoin ou apport d'énergie soit intelligemment corrélés (par exemple par introduction d'un sensible retard d'horaire d'un ordre de marche pour un départ d'un premier véhicule par rapport à un second véhicule localisé en aval du premier véhicule et n'ayant pas encore entamé sa phase de freinage avant son arrêt prévu sous horaire fixe) dans le but d'éviter les problèmes précités dans le cadre de l'invention. En d'autres termes, des pluralités d'ordres de marche sont périodiquement modifiés pour adapter position et cinématique de véhicules avoisinés afin de pouvoir corréler c'est-à-dire faire coïncider leurs besoins et apports énergétiques mutuellement transférables sous un des critères temporels et spatiaux de marches optimales. Sachant que les dites modifications des ordres de marche sont fréquentes, elles n'impliquent que des ralentissements, accélérations ou arrêts prolongés de certains véhicules sous de faibles laps de temps (par exemple 10s), ne perturbant ainsi quasiment pas les utilisateurs/passagers du réseau/système de transport public.

En particulier dans le cas de système de transport automatique (tels qu'une ligne de métro sans conducteur voire des lignes de transport public comprenant des balises de localisation sur leur parcours), et du fait de la connaissance directe et dynamique des véhicules, la méthode selon l'invention peut être aisément mise en œuvre.

La mise en œuvre de la méthode selon l'invention, à l'inverse de l'enseignement de DE 196 52407 C1 est aussi avantageusement possible, dès lors que des ordres de marche de véhicule présentent des marges de variations acceptables pour une utilisation immédiate ou une récupération prédictive quasi-immédiate d'énergie impliquant d'adapter leur cinématique au sens de recalage d'horaire de départ, d'horaire d'arrêt, etc. Un ensemble de sous-revendications présente également des avantages de l'invention.

La méthode selon l'invention prévoit que la table horaire d'ordre de marches de tous les véhicules peut enfin être établie en prenant en compte au moins un des paramètres complémentaires suivant : un nombre de véhicules en freinage, un nombre de consommateurs, une vitesse instantanée de chaque véhicule, ainsi que tout autre paramètre lié à un mode sécurisé ou même dégradé de fonctionnement cinématique de véhicule. A priori, ces paramètres supplémentaires peuvent idéalement découler de la localisation précitée en mode sécurisé, « non dégradé » du trafic dans le réseau, mais si un signal d'alerte indique un mode dégradé pour au moins un véhicule, la méthode selon l'invention présente à nouveau l'avantage d'être robuste pour tous les autres véhicules du réseau, car elle permettra également par exemple de ne pas imposer à un véhicule en mode dégradé tel qu'un manque en énergie de palier au besoin d'un autre véhicule en besoin d'énergie. La méthode selon l'invention prévoit que les ordres de la table horaire sont distribués soit par enregistrement de la dite table, ou de ses ordres, dans un module embarqué de commande de marche de véhicule soit en temps réel par transmission de la table, ou de ses ordres, instantanément modifiables à tous les véhicules. De cette façon, même si le nombre de véhicules dans le réseau augmente (phase de pointe), leurs ordres de marche sont modifiables autonomement toujours selon le schéma présenté ci-dessus.

La méthode selon l'invention prévoit que les ordres variables ou à modifier de marche comprennent au moins un des ordres suivant : arrêt prolongé ; arrêt prématuré ; départ prématuré ; vitesse réduite ; vitesse accélérée ; intervalle d'accélération ou de décélération. De cette manière, ces variations restant toujours fréquemment actualisées sous de faibles intervalles, elles tendent à être quasi continues et sous de faibles amplitudes, afin de ne pas perturber le trafic global de plusieurs véhicules avoisinés (pouvant échanger de l'énergie selon la méthode). En particulier, les ordres variables de marche tels que « arrêt prolongé » ou « départ prématuré » sont variables sous un intervalle maximal raisonnable pour ne pas perturber une fréquence minimale de trafic imposé, par exemple sous un intervalle maximum d'arrêt prolongé de 10s.

La méthode selon l'invention prévoit qu'en cas de variation du nombre global de véhicules ou de la fréquence du réseau de transport, la table horaire est actualisée en temps réel, soit sous un schéma prédéfini en fonction d'au moins un type de perturbation, soit par sous un schéma dynamique d'ordres modifiés et instantanément distribués aux véhicules. Ici encore, la méthode apporte une haute flexibilité adaptée au caractère plus ou moins prévisionnel et dynamique d'un réseau. En particulier, lors de modifications, extensions, voire interruptions de parties de réseaux, la méthode selon l'invention permet une gestion énergétique autonome tant sous une forme prévue de façon précise ou moins. Il n'est donc plus nécessaire à un gérant de réseau de transport de réaliser des planifications énergétiques hautement complexes et de toute façon vouées à des schémas de perturbations dont le caractère intempestif peut amener à un blocage étendu du trafic.

La méthode selon l'invention prévoir enfin que les ordres variables de marche dépendent aussi de facteurs de profil des lignes telles que des pentes, viaduc, etc. et de facteurs de charge tel qu'un nombre de passagers du réseau de transport. De la sorte, la méthode selon l'invention est adéquatement adaptée à des facteurs externes au réseau, mais influant sur ses besoin énergétiques en vue de modifier les ordres de marche des véhicules.

Il est aussi ainsi avantageusement proposé une plate-forme algorithmique de mise en œuvre de la méthode selon l'invention, ayant un support de mémoire pour y enregistrer la table horaire, la dite table horaire comprenant au moins un ordre de marche d'un ou plusieurs véhicules, le dit ordre de marche étant à faire exécuter instantanément par chacun des dits véhicule du réseau de transport. Par ce biais, des ordres de marche de chaque véhicule peuvent être modifiés selon l'invention plus autonomement voire entre les véhicules mêmes (par technique de transmission de données inter-véhicules par échanges « Hop-by-Hop » tel que pour une configuration de réseau en carrousel où des cycles de modifications des ordres de marche sont séquentiellement imposés sur toute la longueur du carrousel) et sous un protocole de communication sécuritaire adapté aux exigences actuelles de transport public.

Egalement, la plate-forme algorithmique selon l'invention peut de manière centrale comprendre au moins une partie de support de mémoire dans un poste central de contrôle de trafic global du réseau de transport, ladite partie étant interconnectable avec des modules d'exécution d'ordre de marche des véhicules. Cette configuration algorithmique à distribution de données plus centrale peut être avantageuse si un gérant du réseau souhaite mettre en œuvre la méthode selon l'invention à partir de son réseau existant incluant des commandes centrales d'ordre de marche. Cette plateforme algorithmique est rapide et simple à installer, car elle ne nécessite qu'une actualisation d'un algorithme central de contrôle et de commande du réseau et des véhicules.

Enfin, la plate-forme algorithmique selon l'invention peut comprendre au moins une partie de support de mémoire embarquée dans un véhicule reliée à un module d'exécution d'ordre de marche du véhicule. Cette délocalisation de contrôle et commande de véhicule dans le véhicule même rend la mise en œuvre de la méthode selon l'invention plus flexible, car éventuellement plus autonome, en particulier dans l'expectative de permettre une communication inter-véhicules afin de localement modifier des ordres de marche dans le réseau sans structure plus lourde de communication via un poste central.

La plate-forme algorithmique selon l'invention prévoit que le module d'exécution d'ordre de marche du véhicule exécute un programme de marche de véhicule respectant une contrainte de consommation électrique minimale. D'autres contraintes peuvent aussi être imposées afin de pouvoir éviter que des modifications d'ordre de marche restent dans un domaine à amplitude restreinte n'impliquant ainsi que des variations de trafic (marche) quasi continues et dont la moyenne des variations respecte des calendriers d'horaires butoirs, ceux-ci étant entendables pour garantir satisfaction du trafic journalier tant pour le gérant que pour les utilisateurs/passagers du réseau de transport public.

Des exemples de réalisation et d'application sont fournis à l'aide de figures décrites :
- Figure 1: Profil énergétique type selon l'ordre de marche d'un véhicule,
- Figure 2: Profils énergétiques sans (2A) et avec (2B) mise en oeuvre de la méthode selon l'invention par modification d'au moins un des ordres de marche de deux véhicules,
- Figure 3: Mise en oeuvre de la méthode selon l'invention par modification cyclique d'ordres de marche de véhicules sur un parcours de type carrousel.

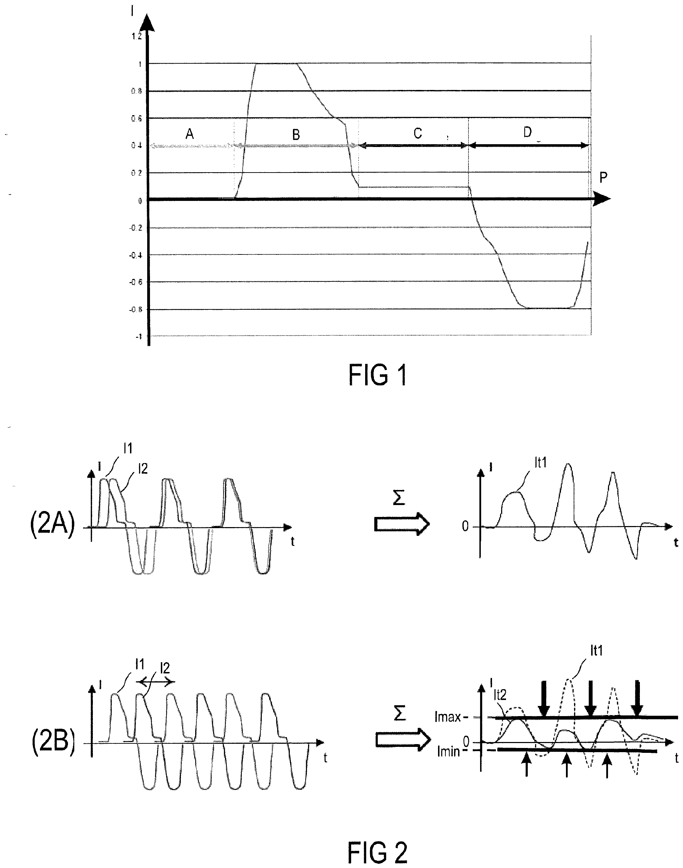

Figure 1 présente un profil énergétique I type selon le parcours P sous ordre de marche d'un véhicule dans un système de transport connu, entre deux stations d'arrêt. La consommation ou un apport potentiel d'énergie est ainsi représenté sous quatre phases successives A, B, C, D :
- en phase A, le véhicule se situe en station à l'arrêt et donc ne consomme principalement aucune énergie, du moins requise pour se déplacer ;
- en phase B, le véhicule quitte la station et présente une consommation d'énergie de traction requise pour accélérer jusqu'à atteindre une vitesse réglementaire ;
- en phase C, le véhicule poursuit sa course sous une vitesse quasi constante sous forme d'un palier de vitesse ;
- en phase D, le véhicule approche d'une nouvelle station d'arrêt et amorce un freinage durant lequel un apport d'énergie dudit véhicule par récupération de l'énergie de freinage est possible.

Figure 2A présente, sous un premier graphe, un premier et un second profils énergétiques I1, I2 selon figure 1 respectivement d'un premier et d'un second véhicule pouvant par exemple se déplacer en sens inverse sur deux voies disposées entre deux stations d'arrêt. Les véhicules se croisant ainsi sont alors suffisamment avoisinés afin de permettre un échange énergétique tel qu'au moins décrit dans l'état de la technique DE 196 52407 C1. Plus exactement, figure 2A comprend des profils énergétiques de véhicules en fonction du temps t se croisant ainsi entre une première, une seconde, une troisième et une quatrième station. Entre la première et la seconde station, le deuxième véhicule démarre de la seconde station avec un retard par rapport au premier véhicule ayant déjà démarré depuis la première station. Certes, un échange énergétique s'avère possible entre les deux véhicules car un d'entre eux peut présenter une phase consommatrice pendant laquelle une phase d'apport par restitution de courant de l'autre véhicule sera possible. Ainsi, en globalité sous un deuxième graphe, un profil énergétique total It1 du système de transport entre les quatre stations peut être déduit par addition algébrique des profils I1, I2 de chaque véhicule (en fait tous les véhicules se croisant sur le parcours entre les quatre stations). Même si le profil énergétique total It1 présente certes des pics atténués d'appel de puissance (It1>0) car des phases consommatrice et de récupération d'énergie sont couplées entre des véhicules, les dits pics de consommation ne sont pas quantitativement maitrisables sous un seuil souhaité en fonction des aléas du trafic, des conditions de parcours, du nombre de passagers, etc. De plus, le profil énergétique total It1 présente également des phases de restitution potentielle d'énergie (It1<0) qui finalement n'est donc pas non plus activement récupérée selon un optimum maitrisé et forment ainsi des pertes inévitables ou/et des échauffements superflus de freins.

Figure 2B présente sous le même modèle que figure 2A, les profils énergétiques I1, I2, It1 sous deux graphes, mais en ayant mis en œuvre la méthode selon l'invention. En d'autres termes, et afin de simplifier l'exemple donné, l'ordre de marche du premier et/ou du second véhicule va être modifié, en ce que :
- une table horaire d'ordres de marches de tous les véhicules est établie en prenant en compte au moins des paramètres suivant : une localisation dynamique de chaque véhicule, un horaire d'arrêt de chaque véhicule hors d'une zone d'arrêt, un horaire de départ de chaque véhicule dans une zone d'arrêt dans le réseau de transport;
- en fonction de variations temporelles et cinématiques d'au moins un des dits paramètres, au moins une partie des ordres de marche de la table horaire est modifiée chronologiquement selon au moins un critère de distribution maximale de l'énergie récupérée du freinage à des consommateurs en appel potentiellement actif de puissance ;
- la table horaire comprenant les ordres est délivrée aux véhicules.

Dans le cas de la figure 2B, premier graphe, le second véhicule correspondant au second profil I2 est localisé à l'arrêt et ayant un horaire de départ de toute façon retardé par rapport au départ du premier véhicule localisé en mouvement va ainsi être élu (du moins entre les deux premières stations) pour démarrer avec au moins un retard sensiblement accentué de façon à faire coïncider au moins sa phase de démarrage (phase B, figure 1) avec la phase de restitution d'énergie (phase D, figure 1) du premier véhicule. Sur le deuxième graphe de la figure 2B, deux avantages sont ainsi visibles :
- un profil énergétique total It2 de la figure 2B présente un maximum Imax maitrisé de consommation d'énergie, ce dernier étant considérablement inférieur aux pics du profil énergétique total It1 selon figure 2A;
- le profil énergétique total It2 de la figure 2B présente un minimum Imin maitrisé de restitution d'énergie, ce dernier (en valeur absolue) étant considérablement inférieur aux pertes du profil énergétique total It1 selon figure 2A.

Cet exemple fort simple de modification d'ordre de marche selon figure 2A est ainsi a priori possible grâce à l'unique connaissance de la localisation des véhicules dont la proximité permet un échange énergétique. La connaissance des horaires d'arrêt et de départ de tels véhicules est toutefois utile, afin de modifier les ordres de marche selon des critères ne pénalisant pas l'utilisateur/passager du réseau et système de transport. De plus, la méthode selon l'invention permettant des modifications dynamiques d'ordres ciblés de marche, car ayant connaissance de la cinématique de chaque véhicule, permet aussi une modification autonome des dits ordres ou leurs paramètres selon des caractéristiques intempestives (cas d'un mode dégradé d'un véhicule) ou lors de changement de densité de trafic (transition heures creuses et heures de pointe). Cet avantage de haute flexibilité est considérable tant pour un gérant de réseau/système de transport que pour les utilisateurs/passagers.

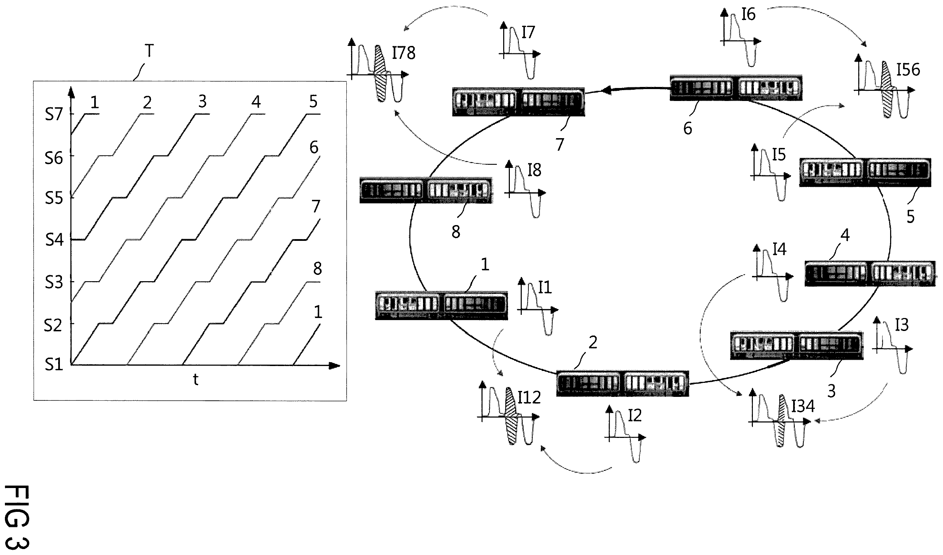

Figure 3 présente une première table horaire T de base pour définir des ordres de marche de plusieurs trains 1, 2, 3, 4, 5, 6, 7, 8 circulant entre sept stations S1, S2, S3, S4, S5, S6, S7 sur un parcours de type carrousel également représenté avec les profils énergétique respectifs I1, I2, I3, I4, I5, I6, I7, I8 des dits trains, en faisant coïncider les phases B et D de couples de train (selon figure 1 et 2B). Selon leur localisation (selon les figures 1 ou 2B encore), la mise en oeuvre de la méthode selon l'invention par modification cyclique d'ordres de marche de trains est ainsi applicable en fonction d'un principe de proximité de groupes de trains. Principalement, des phases d'ordre de marche de traction et de freinage de groupes de trains avoisinés respectent la table horaire (ici par exemple pour les couples de trains 1 et 2, 5 et 6, 7 et 8 dont les phases de traction et de freinage sont parfaitement alignées par désynchronisation initiale selon la table horaire afin de générer des profils énergétiques idéaux I12, I56, I78) alors que d'autres phases telles que celle du couple de trains 3 et 4 peuvent cycliquement être partiellement/complémentairement désynchronisées en priorité par rapport à la table horaire de base afin de s'adapter à des variations locales de trafic et éviter des pertes énergétiques. Pour ce couple de trains 3 et 4, les profils énergétiques I3, I4 sont ainsi recalés selon l'invention afin d'aboutir à un profil (re-)modifié I34, présentant une variation sensible par rapport au profil idéal tel qu'il en résulterait de la table horaire initiale pour les trains 3 et 4. En résumé, des recalages locaux de phases (par exemple) d'ordre de marche sont dynamiquement possibles de façon à minimiser les valeurs (absolues) du profil énergétique global du carrousel (tel qu'en figure 2B).

## Revendications

1. Méthode de minimisation d'une consommation électrique requise pour un réseau de transport public comprenant plusieurs consommateurs tels que des véhicules électriques, lesdits véhicules en freinage délivrant une énergie récupérable par des consommateurs du réseau tels que des véhicules en mouvement,
**caractérisée en ce que**
- une table horaire d'ordres de marche de tous les véhicules est établie en prenant en compte au moins les paramètres suivant : une localisation dynamique de chaque véhicule, un horaire d'arrêt de chaque véhicule hors d'une zone d'arrêt, un horaire de départ de chaque véhicule dans une zone d'arrêt dans le réseau de transport;
- en fonction de variations temporelles et cinématiques d'au moins un des dits paramètres, au moins une partie des ordres de marche de la table horaire est modifiée chronologiquement selon au moins un critère de distribution maximale de l'énergie récupérée du freinage à des consommateurs en appel potentiellement actif de puissance ;
- la table horaire comprenant les ordres est délivrée aux véhicules.

2. Méthode selon revendication 1, pour laquelle la table horaire d'ordre de marches de tous les véhicules est établie en prenant en compte au moins un des paramètres complémentaires suivant : un nombre de véhicules en freinage, un nombre de consommateurs, une vitesse instantanée de chaque véhicule, ainsi que tout autre paramètre lié à un mode sécurisé ou dégradé de fonctionnement cinématique de véhicule.

3. Méthode selon revendication 1 ou 2, pour laquelle les ordres de la table horaire sont distribués soit par enregistrement de la dite table, ou de ses ordres, dans un module embarqué de commande de marche de véhicule soit en temps réel par transmission de la table, ou de ses ordres, instantanément modifiables à tous les véhicules.

4. Méthode selon une des revendications 1 à 3, pour laquelle les ordres variables de marche comprennent au moins un des ordres suivant : arrêt prolongé ; arrêt prématuré ; départ prématuré ; vitesse réduite ; vitesse accélérée ; intervalle d'accélération ou de décélération.

5. Méthode selon revendication 4, pour laquelle les ordres variables de marche tels que « arrêt prolongé » ou « départ prématuré » sont variables sous un intervalle maximal raisonnable pour ne pas perturber une fréquence minimale de trafic imposé, par exemple sous un intervalle maximum d'arrêt prolongé de 10s.

6. Méthode selon une des revendications précédentes, pour laquelle en cas de variation du nombre global de véhicules ou de la fréquence du réseau de transport, la table horaire est actualisée en temps réel, soit sous un schéma prédéfini en fonction d'au moins un type de perturbation, soit par sous un schéma dynamique d'ordres modifiés et instantanément distribués aux véhicules.

7. Méthode selon une des revendications précédentes, pour laquelle les ordres variables de marche dépendent de facteurs de profil des lignes telles que des pentes, viaduc, etc. et de facteurs de charge tel qu'un nombre de passagers du réseau de transport.

8. Plate-forme algorithmique comprenant des moyens de mise en œuvre de la méthode selon une des revendications précédentes, ayant un support de mémoire pour y enregistrer la table horaire, la dite table horaire comprenant au moins un ordre de marche d'un ou plusieurs véhicules, le dit ordre de marche étant à faire exécuter instantanément par chacun des dits véhicule du réseau de transport.

9. Plate-forme algorithmique selon revendication 8, comprenant au moins une partie de support de mémoire dans un poste central de contrôle de trafic global du réseau de transport, la dite partie étant interconnectable avec des modules d'exécution d'ordre de marche des véhicules.

10. Plate-forme algorithmique selon revendication 8 ou 9, comprenant au moins une partie de support de mémoire embarquée dans un véhicule reliée à un module d'exécution d'ordre de marche du véhicule

11. Plate-forme algorithmique selon revendication 10 pour laquelle le module d'exécution d'ordre de marche du véhicule exécute un programme de marche de véhicule respectant une contrainte de consommation électrique minimale.

## Patentansprüche

1. Verfahren zur Minimierung eines Stromverbrauchs, der für ein mehrere Verbraucher wie Elektrofahrzeuge umfassendes öffentliches Verkehrsnetz erforderlich ist, wobei die Fahrzeuge beim Bremsen eine Energie abgeben, die von Verbrauchern des Netzes, wie fahrenden Fahrzeugen, verwertbar ist,
**dadurch gekennzeichnet, dass**
- ein Zeitplan mit Fahrbefehlen aller Fahrzeuge aufgestellt wird, wobei wenigstens die folgenden Parameter berücksichtigt werden: eine dynamische Positionsbestimmung eines jeden Fahrzeugs, eine Haltezeit eines jeden Fahrzeugs außerhalb einer Haltezone, eine Abfahrtszeit eines jeden Fahrzeugs in einer Haltezone im Verkehrsnetz;
- in Abhängigkeit von zeitlichen und kinematischen Schwankungen mindestens eines der Parameter mindestens ein Teil der Fahrbefehle des Fahrplans gemäß mindestens einem Kriterium für die maximale Verteilung der gewonnenen Bremsenergie an Verbraucher mit einer möglichen aktiven Leistungsaufnahme chronologisch modifiziert wird;
- der die Befehle umfassende Fahrplan an die Fahrzeuge ausgegeben wird.

2. Verfahren nach Anspruch 1, wobei der Zeitplan mit Fahrbefehlen aller Fahrzeuge aufgestellt wird, indem wenigstens einer der folgenden komplementären Faktoren berücksichtigt wird: eine Zahl von bremsenden Fahrzeugen, eine Zahl von Verbrauchern, eine Momentangeschwindigkeit eines jeden Fahrzeugs sowie jeder andere Parameter in Verbindung mit einem sicheren oder eingeschränkten kinematischen Betriebsmodus des Fahrzeugs.

3. Verfahren nach Anspruch 1 oder 2, wobei die Befehle des Zeitplans entweder durch Speichern des Plans oder seiner Befehle in einem bordeigenen Fahrzeugbetriebssteuermodul oder in Echtzeit durch die Übertragung des Plans oder seiner sofort modifizierbaren Befehle an alle Fahrzeuge verteilt werden.

4. Verfahren nach einem der Ansprüche 1 bis 3, wobei die variablen Fahrbefehle mindestens einen der folgenden Befehle umfassen: einen verlängerten Halt; einen vorzeitigen Halt; eine vorzeitige Abfahrt; eine reduzierte Geschwindigkeit; eine gesteigerte Geschwindigkeit; ein Beschleunigungs- oder Verzögerungsintervall.

5. Verfahren nach Anspruch 4, wobei die variablen Fahrbefehle wie "verlängerter Halt" oder "vorzeitige Abfahrt" innerhalb eines angemessenen maximalen Bereichs variabel sind, sodass sie eine vorgeschriebene minimale Verkehrsfrequenz, beispielsweise bei einem um 10 s verlängerten maximalen Halteintervall, nicht stören.

6. Verfahren nach einem der vorhergehenden Ansprüche, wobei der Zeitplan im Fall einer Schwankung der Gesamtzahl der Fahrzeuge oder der Frequenz des Verkehrsnetzes in Echtzeit entweder nach einem vordefinierten Schema in Abhängigkeit von mindestens einem Störungstyp oder einem dynamischen Schema von modifizierten und sofort an die Fahrzeuge verteilten Befehlen aktualisiert wird.

7. Verfahren nach einem der vorhergehenden Ansprüche, wobei die variablen Fahrbefehle von Faktoren des Linienprofils wie Steigungen, Viadukten etc. und Auslastungsfaktoren wie der Zahl von Fahrgästen des Verkehrsnetzes abhängen.

8. Algorithmische Plattform, umfassend Mittel zur Umsetzung des Verfahrens nach einem der vorhergehenden Ansprüche, die ein Speichermedium zum Speichern des Zeitplans aufweisen, wobei der Zeitplan mindestens einen Fahrbefehl eines oder mehrerer Fahrzeuge umfasst, wobei der Fahrbefehl von jedem der Fahrzeuge des Verkehrsnetzes sofort auszuführen ist.

9. Algorithmische Plattform nach Anspruch 8, umfassend mindestens einen Teil des Speichermediums in einer zentralen Leitstelle für den gesamten Verkehr des Verkehrsnetzes, wobei der Teil mit den Modulen zur Ausführung von Fahrbefehlen der Fahrzeuge wechselseitig verbindbar ist.

10. Algorithmische Plattform nach Anspruch 8 oder 9, umfassend mindestens einen Teil des Speichermediums an Bord eines Fahrzeugs, der mit einem Modul zur Ausführung von Fahrbefehlen des Fahrzeugs verbunden ist.

11. Algorithmische Plattform nach Anspruch 10, wobei das Modul zur Ausführung von Fahrbefehlen des Fahrzeugs ein Fahrzeugfahrprogramm ausführt, das eine Einschränkung bezüglich eines minimalen Stromverbrauchs einhält.

## Claims

1. Method for minimising the electricity consumption required for a public transport network comprising several consumers such as electric vehicles, said vehicles, when braking, delivering energy which is recoverable by consumers on the network such as moving vehicles,
**characterised in that**
- a timetable of running orders for all the vehicles is produced taking account of at least the following parameters: a dynamic location of each vehicle, a stop schedule for each vehicle outside a stop zone, a start schedule for each vehicle in a stop zone in the transport network;
- depending on time and motion variations in at least one of said parameters, at least some of the running orders in the timetable are modified chronologically according to at least one criterion for the maximum distribution of energy recovered from braking to consumers potentially actively requiring power;
- the timetable comprising the orders is delivered to the vehicles.

2. Method according to claim 1, wherein the timetable of running orders for all the vehicles is produced taking account of at least one of the following additional parameters: a number of vehicles braking, a number of consumers, an instantaneous speed of each vehicle, as well as any other parameter associated with a safe or degraded moving vehicle operating mode.

3. Method according to claim 1 or 2, wherein the orders in the timetable are distributed either by storing said table, or its orders, in an onboard vehicle running control module or in real time by transmission of the table, or its instantaneously modifiable orders, to all the vehicles.

4. Method according to one of claims 1 to 3, wherein the variable running orders comprise at least one of the following orders: prolonged stop; premature stop; premature start; reduced speed; accelerated speed; acceleration or deceleration interval.

5. Method according to claim 4, wherein the variable running orders such as "prolonged stop" or "premature start" are variable within a reasonable maximum interval so as not to disturb an imposed minimum traffic frequency, for example within a maximum prolonged stop interval of 10s.

6. Method according to one of the preceding claims, wherein, in the event of variation of the global number of vehicles or the frequency of the transport network, the timetable is updated in real time, either within a predefined pattern depending on at least one type of disturbance, or within a dynamic pattern of orders modified and instantaneously distributed to the vehicles.

7. Method according to one of the preceding claims, wherein the variable running orders depend on line profile factors such as inclines, viaducts, etc. and load factors such as a number of passengers on the transport network.

8. Algorithmic platform comprising means for implementing the method according to one of the preceding claims, having a memory support to store the timetable, said timetable comprising at least one running order of one or more vehicles, said running order being to be executed instantaneously by each of said vehicles in the transport network.

9. Algorithmic platform according to claim 8, comprising at least one part of memory support in a central control position for global traffic in the transport network, said part being interconnectable with vehicle running order execution modules.

10. Algorithmic platform according to claim 8 or 9, comprising at least one part of memory support on board a vehicle linked to a vehicle running order execution module.

11. Algorithmic platform according to claim 10, wherein the vehicle running order execution module executes a vehicle running program respecting a minimum electricity consumption constraint.
